# EUROPÄISCHE PATENTSCHRIFT

(11) **EP 2 474 431 B1**
(45) Veröffentlichungstag und Bekanntmachung des Hinweises auf die Patenterteilung: **21.10.2015**
(21) Anmeldenummer: 11290008.9
(22) Anmeldetag: 11.01.2011
(51) Int. Cl.: B60H 1/00, F16B 5/02

(54) **Kraftfahrzeugklimaaanlage**
Motor vehicle airconditioner
Installation de climatisation de véhicule automobile

(43) Veröffentlichungstag der Anmeldung: 11.07.2012
(73) Patentinhaber: MAHLE Behr France Hambach S.A.S, 57910 Hambach (FR)
(72) Erfinder: Faure, Lionel, 57200 Sarreguemines (FR); Lohmann, Christophe, 67430 Voellerdingen (FR)
(74) Vertreter: Grauel, Andreas

(56) Entgegenhaltungen:
- EP-A1- 1 366 956
- EP-A2- 1 266 778
- DE-U1- 9 416 775
- US-A1- 2010 143 076

## Beschreibung

Die Erfindung betrifft ein Verbindungselement gemäß dem Oberbegriff des Anspruches 1 und eine Kraftfahrzeugklimaanlage gemäß dem Oberbegriff des Anspruches 9.

Kraftfahrzeugklimaanlagen dienen dazu, die dem Innenraum eines Kraftfahrzeuges zuzuführende Luft zu erwärmen und/oder zu kühlen. Hierzu sind die Kraftfahrzeugklimaanlagen mit einem Kältemittelverdampfer zum Kühlen der Luft und einer Heizeinrichtung zum Erwärmen der Luft versehen. Die durch den Kältemittelverdampfer und die Heizeinrichtung geforderte Luft wird von einem Gebläse an einer Frischlufteinlassöffnung und/oder Umlufteinlassöffnung angesaugt und anschließend nach dem Durchleiten durch einen Luftfilter, den Kältemittelverdampfer und die Heizeinrichtung an wenigstens einer Luftauslassöffnung aus dem Gehäuse der Kraftfahrzeugklimaanlage ausgeleitet.

Die verschiedenen Komponenten der Kraftfahrzeugklimaanlage, z. B. die Heizeinrichtung, der Kältemittelverdampfer und/oder der Luftfilter, werden dabei mit Verbindungselementen an dem Gehäuse der Kraftfahrzeugklimaanlage befestigt. Das Verbindungselement umfasst dabei eine Schraube mit einem zylindrischen Stift und einen Schraubenkopf, einen Dämpfungskörper, der mit einer Bohrung des Dämpfungskörpers an dem Stift angeordnet ist, eine Beilagscheibe zwischen dem Dämpfungskörper und dem Schraubenkopf sowie einem Distanzring zwischen dem Dämpfungskörper und dem Stift der Schraube. Diese vier Komponenten des Verbindungselementes sind dabei nicht verliersicher miteinander verbunden, so dass bei der Montage bzw. Befestigung von Komponenten der Kraftfahrzeugklimaanlage an dem Gehäuse die verschiedenen Teile des Verbindungselementes in aufwendiger Weise manuell von Hand vor dem Festschrauben am Gehäuse zu verbinden sind. Bei der Herstellung der Kraftfahrzeugklimaanlage ist somit ein hoher Montage- und Fertigungsaufwand erforderlich, weil die Teile des Verbindungselementes nicht verliersicher miteinander verbunden sind.

Aus der WO 2005/007471 A1 ist eine Scheibenwischvorrichtung, insbesondere für ein Kraftfahrzeug, mit einem Montageabschnitt und einem Befestigungselement zur Befestigung der Scheibenwischvorrichtung in oder am Gehäuse bekannt, wobei das Befestigungselement den Montageabschnitt durchgreift und durch ein Hilfselement gehaltert ist. Das Befestigungselement besteht dabei aus einer Schraube, einem hohlzylinderförmigen Dämpfungskörper aus einem elastischen Gummimaterial und einer kreisscheibenförmigen Platte.

Aus der DE 44 21 878 A1 ist eine schwingungsdämpfende Befestigung einer Scheibenwischerantriebseinrichtung für Kraftfahrzeuge bekannt. Die Scheibenwischerantriebseinrichtung ist an vorbestimmten Befestigungspunkten mit einer Aufnahme ausgestattet, in welcher ein elastomeres Schwingungsdämpfungselement verliersicher angeordnet ist, in dessen Öffnung eine Montageschraube in Montageposition mittels eines Verlierschutzes verliersicher gehalten ist. Zur Bildung des Verlierschutzes ist die Öffnung des Schwingungsdämpfungselementes durch eine an dem Schwingungsdämpfungselement befestigte elastomere Membran geschlossen, wobei die Membran eine zentrale Lochung mit einem kleineren Lichtmaß als der Gewindedurchmesser der Montageschraube aufweist, so dass die Montageschraube durch die elastische Vorspannung des Randes und der zentralen Lochung auf dem Gewindeschaft verliersicher an dem Schwingungsdämpfungselement gehalten ist.

Die DE 94 16 775 U1 offenbart eine Schraube mit einem Dämpfungselement, wobei das Dämpfungselement mit einer Hülse oder einer Unterlegscheibe befestigt wird, gemäß dem Oberbegriff von Anspruch 1.

Die US 2010/0143076 A1 offenbart eine Schraube mit einem Dämpfungselement, das einen radial innen angeordneten Wulst aufweist, welcher in eine Nut der Schraube eingreift.

Die Aufgabe der vorliegenden Erfindung besteht deshalb darin, ein Verbindungselement und eine Kraftfahrzeugklimaanlage zur Verfügung zu stellen, bei dem eine zuverlässige und sichere Befestigung eines Dämpfungskörpers an einer Schraube gewährleistet ist, so dass Befestigungsarbeiten mit dem Verbindungselement einfach ausgeführt werden können.

Diese Aufgabe wird gelöst mit den Merkmalen von Anspruch 1 bzw. mit den Merkmalen von Anspruch 9.

Ein Ausführungsbeispiel der Erfindung betrifft ein Verbindungselement, umfassend eine Schraube mit einem zylindrischen Stift und einem Schraubenkopf als axialen Anschlag für den zylindrischen Stift, wobei der zylindrische Stift mit einem Gewinde versehen ist, einen Dämpfungskörper mit einer Bohrung, wobei in der Bohrung der zylindrische Stift angeordnet ist und der Dämpfungskörper verliersicher mit der Schraube verbunden ist, wobei der Dämpfungskörper mit einer formschlüssigen Verbindung zwischen dem Dämpfungskörper und dem zylindrischen Stift an der Schraube in Richtung einer Längsachse des Stiftes befestigt ist und die formschlüssige Verbindung in Richtung der Längsachse des Stiftes zwischen den beiden axialen Enden der Bohrung ausgebildet ist. Die formschlüssige Verbindung benötigt damit in vorteilhafter Weise in Richtung der Längsachse des Stiftes außefialb der Bohrung des Dämpfungskörpers keinen Bauraum und ist damit bei der Montage nicht störend und andererseits ist damit die formschlüssige Verbindung besonders sicher und zuverlässig.

Insbesondere weist die formschlüssige Verbindung in Richtung einer Längsachse des Stiftes einen Abstand von mehr als 5%, 10% oder 20% der Ausdehnung der Bohrung in Richtung der Längsachse zu den beiden axialen Enden der Bohrung auf.

In einer erfindungsgemäßen Ausgestaltung ist der zylindrische Stift mit einer radialen Aussparung versehen und der Dämpfungskörper weist an der Bohrung einen radialen Vorsprung auf, welcher in die radiale Aussparung eingreift oder umgekehrt zur verliersicheren Verbindung des Dämpfungskörpers mit der Schraube und/oder die formschlüssige Verbindung besteht zwischen dem Dämpfungskörper an der Bohrung und dem zylindrischen Stift. An dem Dämpfungskörper ist somit eine ringförmige Wulst ausgebildet, welche in eine Ringnut an dem zylindrischen Stift eingreift und dadurch in axialer Richtung formschlüssig den Dämpfungskörper an dem zylindrischen Stift befestigt. Abweichend hiervon kann auch in umgekehrter Weise an dem zylindrischen Stift ein Vorsprung ausgebildet sein, welche in eine Aussparung an dem Dämpfungskörper an der Bohrung eingreift.

In einer ergänzenden Ausgestaltung ist die Aussparung eine Ringnut und der Vorsprung eine ringförmige Wulst.

Vorzugsweise ist der Dämpfungskörper mit Hilfe der Aussparung und dem Vorsprung formschlüssig, insbesondere im Wesentlichen ausschließlich formschlüssig, in Richtung der Längsachse des Stiftes an der Schraube befestigt. Die formschlüssige Verbindung bezieht sich vorzugsweise auf eine axiale Sicherung bzw. Verbindung des Dämpfungskörpers mit dem zylindrischen Stift. Im Wesentlichen ausschließlich formschlüssig bedeutet dabei, dass die von der Verbindung in axialer Richtung übertragbaren Kräfte zu mehr als 70%, 80% oder 90% mittels der formschlüssigen Verbindung übertragbar sind. Zusätzlich kann in einem geringen Umfang auch eine kraftschlüssige Verbindung in axialer Richtung zwischen dem Dämpfungskörper und dem zylindrischen Stift bestehen, beispielsweise indem der Dämpfungskörper an der Bohrung unter einer radialen Vorspannung auf dem zylindrischen Stift aufliegt.

In einer Variante ist zwischen dem Schraubenkopf und dem Dämpfungskörper eine Beilagscheibe angeordnet. Die Beilagscheibe ist somit von dem Dämpfungskörper an der Schraube befestigt.

Zweckmäßig besteht der Dämpfungskörper wenigstens teilweise, insbesondere vollständig, aus einem elastischen Material, z. B. Kunststoff und/oder Gummi.

In einer weiteren Ausführungsform ist der zylindrische Stift nur an dem außerhalb der Bohrung des Dämpfungskörpers angeordneten Abschnitt mit dem Gewinde versehen und/oder der zylindrische Stift weist an dem außerhalb der Bohrung des Dämpfungskörpers angeordneten Abschnitt einen kleineren Durchmesser auf als an dem innerhalb der Bohrung angeordneten Abschnitt.

Erfindungsgemäß ist der Dämpfungskörper unter einer Druckvorspannung zwischen dem Schraubenkopf und dem Vorsprung oder der Aussparung angeordnet. Dabei ist der Dämpfungskörper aufgrund der Druckvorspannung elastisch verformt, so dass der Dämpfungskörper in axialer Richtung eine negative Dehnung aufweist.

Ein Verfahren zur Herstellung eines Verbindungselementes, insbesondere eines in dieser Schutzrechtsanmeldung beschriebenen Verbindungselementes, mit den Schritten: zur Verfügung stellen einer Schraube mit einem zylindrischen Stift und einem Schraubenkopf, wobei der zylindrische Stift mit einem Gewinde versehen ist, zur Verfügung stellen eines elastischen Dämpfungskörpers mit einer Bohrung, Aufschieben des Dämpfungskörpers auf die Schraube, indem der zylindrische Stift in die Bohrung des Dämpfungskörpers eingeführt wird, Verbinden des Dämpfungskörpers mit der Schraube, wobei beim Aufschieben des Dämpfungskörpers auf den Stift aufgrund eines unterschiedlichen Durchmessers des zylindrischen Stiftes der Dämpfungskörper radial nach außen an der Bohrung elastisch verformt wird und nach dem elastischen Verformen und beim weiteren Aufschieben aufgrund der Geometrie des zylindrischen Stiftes eine elastische Rückverformung eintritt und dadurch der Dämpfungskörper formschlüssig mit dem Stift verbunden wird.

In einer ergänzenden Variante wird beim Aufschieben des Dämpfungskörpers auf den Stift aufgrund eines unterschiedlichen Durchmessers des zylindrischen Stiftes der Dämpfungskörper radial nach außen an der Bohrung elastisch verformt und nach dem elastischen Verformen und beim weiteren Aufschieben aufgrund der Geometrie, z. B. einer radialen Aussparung oder eines Vorsprungs, des zylindrischen Stiftes tritt eine elastische Rückverformung ein und dadurch wird der Dämpfungskörper formschlüssig mit dem Stift verbunden.

In einer weiteren Variante rückverformt sich der Dämpfungskörper in eine Aussparung, insbesondere eine Nut, oder zu einem Vorsprung, insbesondere eine ringförmige Wulst, an dem zylindrischen Stift elastisch.

In einer weiteren Ausgestaltung wird die elastische Verformung und/oder Rückverformung, insbesondere ausschließlich, in radialer Richtung ausgeführt und/oder die elastische Verformung und/oder Rückverformung an dem Dämpfungskörper an der Bohrung wird in einem Abstand, vorzugsweise mehr als 5%, 10% oder 20% der Ausdehnung der Bohrung in Richtung der Längsachse zu den beiden axialen Enden der Bohrung, zu den beiden Enden der Bohrung ausgeführt und/oder das Verfahren bei einer Befestigung wird von wenigstens einer Komponente einer Kraftfahrzeugklimaanlage, insbesondere an dem Gehäuse, ausgeführt.

Erfindungsgemäße Kraftfahrzeugklimaanlage, umfassend ein Gehäuse, ein Gebläse, eine Heizeinrichtung, einen Kältemittelverdampfer, wenigstens ein Verbindungselement, wobei das wenigstens eine Verbindungselement als ein in dieser Schutzrechtsanmeldung beschriebenes Verbindungselement ausgebildet ist, insbesondere mit dem wenigstens einen Verbindungselement die Heizeinrichtung und/oder der Kältemittelverdampfer an dem Gehäuse befestigt ist.

In einer weiteren Variante ist mit dem wenigstens einen Verbindungselement ein Kältemittelkondensator eines Kältemittelkreislaufs einer Klimaanlage an einem Kühlmittelkühler, insbesondere einem Wasserkasten des Kühlmittelkühlers, befestigt.

In einer zusätzlichen Ausgestaltung umfasst die Kraftfahrzeugklimaanlage eine Frischlufteinlassöffnung zum Einleiten von Frischluft aus einer Umgebung eines Kraftfahrzeuges und eine Umlufteinlassöffnung zum Einleiten von Umluft aus einem Innenraum des Kraftfahrzeuges und/oder einen Luftfilter.

In einer weiteren Ausgestaltung umfasst die Kraftfahrzeugklimaanlage wenigstens eine Luftklappe, z. B. Umluftklappe, und/oder wenigstens einen Aktuator zum Bewegen einer Luftklappe.

In einer weiteren Ausgestaltung ist der wenigstens eine Aktuator ein Elektromotor oder ein Piezoelement.

Insbesondere besteht das Gehäuse oder ein Teil des Gehäuses der Kraftfahrzeugklimaanlage wenigstens teilweise aus, vorzugsweise thermoplastischen, Kunststoff.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht eines Verbindungselementes zur Befestigung bzw. Verbindung von Komponenten der Kraftfahrzeugklimaanlage an einem Gehäuse der Kraftfahrzeugklimaanlage,
- Fig. 3: einen Längsschnitt des Verbindungselementes gemäß Fig. 2,
- Fig. 4: eine perspektivische Ansicht eines Sammelbehälters, der an einem Wasserkasten mit Verbindungselementen befestigt ist und
- Fig. 5: eine perspektivische Ansicht des Sammelbehälters gemäß Fig. 4.

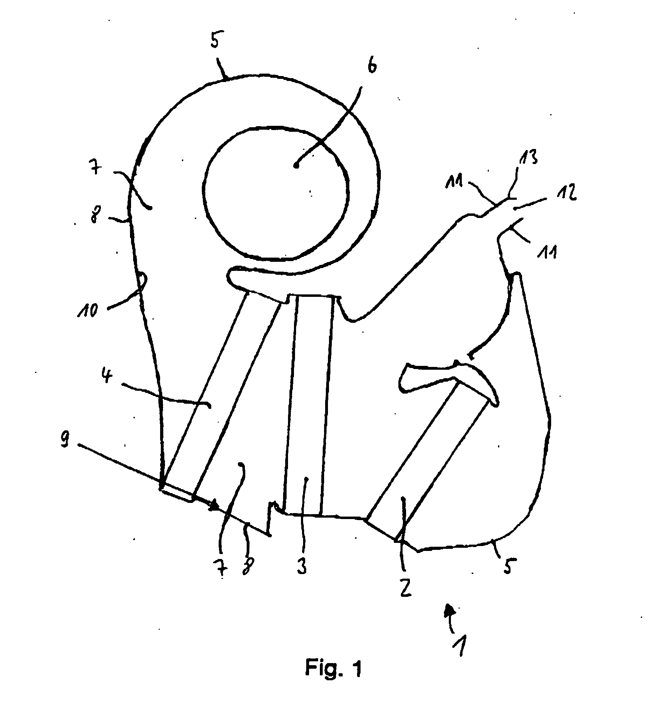

Fig. 1 zeigt eine Kraftfahrzeugklimaanlage 1. In einem ein- oder mehrteiligen Gehäuse 5 mit einer Bodenwandung 9 ist ein Gebläse 6, ein Luftfilter 4, ein Kältemittelverdampfer 3 und ein Wärmeübertrager als eine, z. B. elektrische, Heizeinrichtung 2 angeordnet. Das Gehäuse 5 bildet somit einen Luftkanal 7 zum Durchleiten der Luft. Gehäusewandungen 8 des Klimaanlagengehäuses 5 weisen an der Innenseite eine Oberfläche 10 auf, welche den Luftkanal 7 begrenzen. Die Luft für den Innenraum eines Kraftfahrzeuges wird mittels des Gebläses 6 durch den Luftfilter 4, den Kältemittelverdampfer 3 sowie die Heizeinrichtung 2 geleitet. Der Kältemittelverdampfer 3 dient zum Kühlen der durch die Kraftfahrzeugklimaanlage 1 geleiteten Luft. Aus Luftauslassöffnungen 12 an Luftauslassstutzen 11 strömt die gekühlte und/oder erwärmte Luft aus dem Gehäuse 5 der Kraftfahrzeugklimaanlage 1 aus. In Fig. 1 ist nur einer von drei Luftauslassstutzen 11 mit einem Ende 13 dargestellt.

Bei der Herstellung der Kraftfahrzeugklimaanlage 1 sind verschiedene Komponenten der Kraftfahrzeugklimaanlage 1, z. B. die Heizeinrichtung 2, der Kältemittelverdampfer 3, der Luftfilter 4 und/oder das Gebläse 6, an der Kraftfahrzeugklimaanlage 1 bzw. Teilen zum Befestigen dieser Komponenten zu befestigen. Vorzugsweise werden dabei diese Komponenten an dem Gehäuse 5 der Kraftfahrzeugklimaanlage 1 mit Verbindungselementen 14 befestigt.

Das Verbindungselement 14 umfasst eine Schraube 15 mit einem zylindrischen Stift 16. An dem zylindrischen Stift 16 ist an einem unteren Abschnitt ein Gewinde 19 als Außengewinde ausgebildet. Das Gewinde 19 kann dabei ein selbstschneidendes Gewinde sein, welches in eine Öffnung, z. B. Bohrung, als Befestigungsöffnung an dem Gehäuse der Kraftfahrzeugklimaanlage eingeschraubt wird. Abweichend hiervon kann der zylindrische Stift 16 durch eine Öffnung bzw. Befestigungsöffnung an dem Gehäuse 6 durchgeführt werden und anschließend wird auf das Gewinde 19 an dem zylindrischen Stift 16 eine Mutter mit einem Innengewinde aufgeschraubt. Zusätzlich ist der zylindrische Stift 16 auch in einer Befestigungsöffnung an der zu befestigenden Komponente angeordnet, so dass dadurch eine Verbindung zwischen der zu befestigenden Komponente, z. B. dem Kältemittelverdampfer 3, und dem Gehäuse 5 hergestellt werden kann.

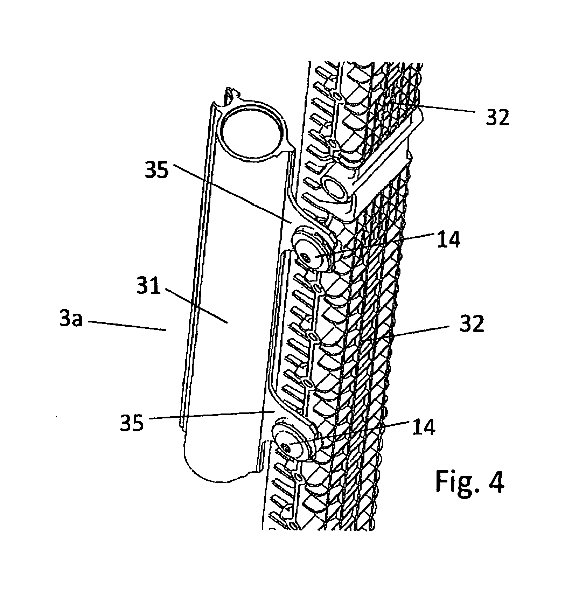

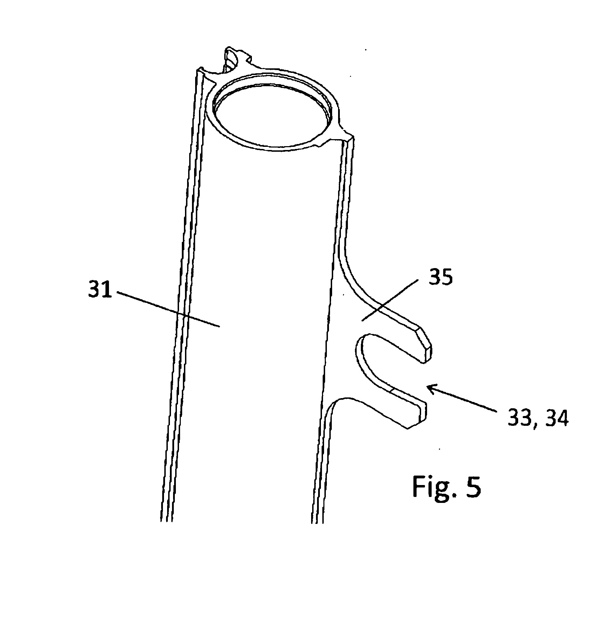

In Fig. 4 und 5 ist ein weiteres Ausführungsbeispiel zur Befestigung einer Komponente der Kraftfahrzeugklimaanlage 1 dargestellt. Der Kältemittelkondensator 3a umfasst eine Vielzahl von Flachrohren mit dazwischen angeordneten Wellrippen. Die Flachrohre sind an den Enden der Flachrohre fluidleitend jeweils mit einem Sammelrohr miteinander verbunden (nicht dargestellt). An einem der beiden Sammelrohre ist ein Sammelbehälter 31 (nur Sammelbehälter 31 in Fig. 4 und dargestellt) befestigt. Der Sammelbehälter 31 mit einem Trockner und/oder Filter für das Kältemittel weist zwei Stutzen 35 auf. Die Stutzen 35 sind mit einem Befestigungsschlitz 34 als Befestigungsöffnung 33 ausgebildet. Mit einem von Kühlflüssigkeit durchströmten Kühlmittelkühler (nicht dargestellt) wird ein Verbrennungsmotor des Kraftfahrzeuges gekühlt. Der Kühlmittelkühler umfasst einen Wasserkasten 32. An dem Wasserkasten 32 sind zwei Befestigungsöffnungen als Bohrungen (nicht dargestellt) vorhanden. Mit den beiden Verbindungselementen 14 jeweils in der Befestigungsöffnung des Wasserkastens 32 und in dem Befestigungsschlitz 34 ist der Sammelbehälter 31 und damit der Kältemittelkondensator 3a an dem Wasserkasten 32 und somit an dem Kühlmittelkühler befestigt.

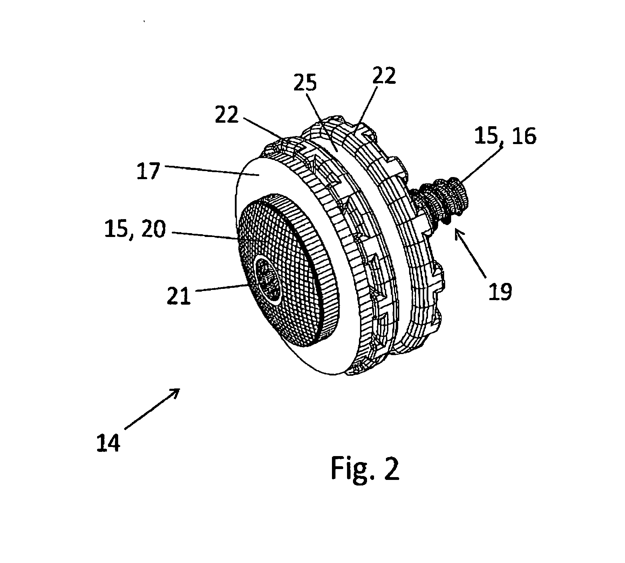

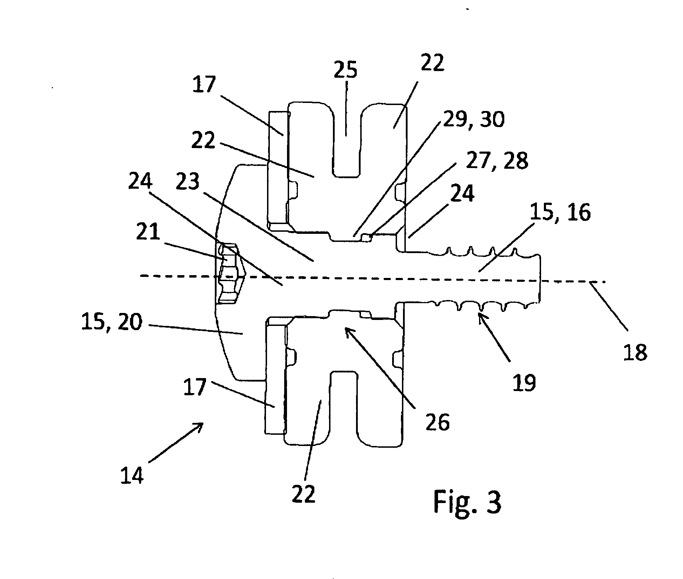

Das Verbindungselement 14 umfasst außerdem einen hohlzylindrischen Dämpfungskörper 22 aus einem elastischen Material, z. B. Kunststoff. Der Dämpfungskörper 22 ist mit einer Bohrung 23 versehen und außenseitig ist an dem Dämpfungskörper 22 eine äußere Ringnut 25 vorhanden (Fig. 2 und 3). Die äußere Ringnut 25 hat die Aufgabe, dass der Dämpfungskörper 22 in axialer Richtung, d.h. in Richtung einer Längsachse 18 des zylindrischen Stiftes 16 leichter elastisch verformbar ist. Am Ende der Schraube 15 bzw. des zylindrischen Stiftes 16 ist ferner ein Schraubenkopf 20 als axialer Anschlag für den zylindrischen Stift 16 ausgebildet. Der Schraubenkopf 20 ist mit einer Geometrie 21, z. B. einem Sechskant, zur Verbindung mit einem Schraubendreher versehen. Die Geometrie 21 dient dazu, dass die Schraube 15 mit einem Schraubendreher in eine Rotationsbewegung um die Längsachse 18 des Stiftes versetzt werden kann, um das Gewinde 19 in einem Gegengewinde, z. B. ein Innengewinde einer Mutter, einschrauben zu können. Zwischen dem Schraubenkopf 20 und dem Dämpfungskörper 22 ist eine Beilagscheibe 17 vorhanden. Die Beilagscheibe 17 ist scheibenförmig und mit einer zentralen Bohrung versehen. In dieser zentralen Bohrung ist der zylindrische Stift 16 angeordnet (Fig. 3). Die Schraube 15 und die Beilagscheibe 17 bestehen dabei vorzugsweise aus Metall, z. B. Stahl oder Aluminium.

Der Dämpfungskörper 22 ist mit einer formschlüssigen Verbindung 26 in axialer Richtung, d. h. in Richtung der Längsachse 18 des Stiftes 16, an dem zylindrischen Stift 16 befestigt. Hierzu ist an dem Dämpfungskörper 22 an den Bereich, welcher die Bohrung 23 des Dämpfungskörpers 22 begrenzt, ein radialer Vorsprung 29 als eine ringförmige Wulst 30 vorhanden. Der Stift 16 weist einen Abschnitt mit einem kleineren Durchmesser auf und an diesem Abschnitt ist das Gewinde 19 vorhanden. An einem weiteren Abschnitt weist der Stift 16 einen größeren Durchmesser auf und an diesem Abschnitt ist der Dämpfungskörper 22 angeordnet. Ferner ist an diesem Abschnitt des Stiftes 16 mit dem größeren Durchmesser eine radiale Aussparung 27 als eine Ringnut 28 vorgesehen. Dabei greift die ringförmige Wulst 30 des Dämpfungskörpers 22 in die Ringnut 28 des zylindrischen Stiftes 16 ein, so dass die formschlüssige Verbindung 26 in axialer Richtung zwischen dem Dämpfungskörper 22 und dem zylindrischen Stift 16 besteht. Damit ist der Dämpfungskörper 22 verliersicher an dem Stift 16 und auch die Beilagscheibe 17 verliersicher an der Schraube 15 befestigt.

Die Bohrung 23 des Dämpfungskörpers 22 weist zwei axiale Enden 24 auf. Ein erstes, gemäß der Darstellung in Fig. 3 rechtes axiales Ende 24 der Bohrung 23 ist dabei an dem Abschnitt des zylindrischen Stiftes 16 mit dem kleineren Durchmesser, jedoch kurz vor dem Abschnitt mit dem größeren Durchmesser, ausgebildet. Das zweite, gemäß der Darstellung in Fig. 3 linke axiale Ende 24 der Bohrung 23 ist dabei im Bereich der Beilagscheibe 17 vorhanden. Die formschlüssige Verbindung 26, d. h. die Ringnut 28 und die ringförmige Wulst 30, ist dabei in Richtung der Längsachse 18 in einem Abstand zu den beiden axialen Enden 24 der Bohrung 23 ausgebildet. Die formschlüssige Verbindung 26 ist somit vollständig innerhalb des von der Bohrung 23 eingeschlossenen zylinderförmigen Raumes ausgebildet. Dadurch kann in vorteilhafter Weise gewährleistet werden, dass von außen auf das Verbindungselement 14 wirkende Kräfte im Wesentlichen keinen Einfluss auf die formschlüssige Verbindung 26 haben.

Bei der Herstellung des Verbindungselementes 14 wird zunächst die Beilagescheibe 17 auf die Schraube 15 aufgeschoben, bis die Beilagscheibe 17 auf dem Schraubenkopf 20 als axialen Anschlag des zylindrischen Stiftes 16 aufliegt. Anschließend wird der Dämpfungskörper 22 auf die Schraube 15 aufgeschoben, in dem der zylindrische Stift 16 in die im Wesentlichen zylindrische Bohrung 23 des Dämpfungskörpers 22 eingeschoben wird. Dabei ist zunächst keine radiale elastische Verformung des Dämpfungskörpers 22 nach außen erforderlich, solange sich der Dämpfungskörper an dem Abschnitt des Stiftes 16 mit dem kleineren Durchmesser bzw. Radius befindet. Beim weiteren Aufschieben des Dämpfungskörpers 22 auf den zylindrischen Stift 16 wird die ringförmige Wulst 30 an dem Abschnitt des zylindrischen Stiftes 16 mit dem größeren Durchmesser bzw. Radius außerhalb der Ringnut 28 radial nach außen verformt. Beim weiteren Aufschieben des Dämpfungskörpers 22 gelangt dabei die ringförmige Wulst 30 in den Bereich der Ringnut 28 an dem Stift 16, so dass sich anschließend der Dämpfungskörper 22 im Bereich der ringförmigen Wulst 30 elastisch rückverformen kann und die ringförmige Wulst 30 in der Ringnut 28 angeordnet ist gemäß der Darstellung in Fig. 3 zur Herstellung der formschlüssigen Verbindung 26 zwischen dem Dämpfungskörper 22 und dem Stift 16.

Insgesamt betrachtet sind mit dem erfindungsgemäßen Verbindungselement 14 und der erfindungsgemäßen Kraftfahrzeugklimaanlage 1 wesentliche Vorteile verbunden. Sämtliche Teile des Verbindungselementes 14, nämlich die Schraube 15, die Beilagscheibe 17 und der Dämpfungskörper 22 sind verliersicher zu einem Montageteil miteinander verbunden. Bei der Herstellung der Kraftfahrzeugklimaanlage 1 brauchen somit nicht unterschiedliche Teile 15, 17, 22 des Verbindungselementes 14 getrennt vorgehalten und müssen nicht anschließend bei der Montage in aufwendiger Weise zusammen montiert werden, sondern sämtliche Teile 15, 17, 22 des Verbindungselementes 14 können gemeinsam vorgehalten und zur Montage von Komponenten bzw. zur Befestigung von Komponenten der Kraftfahrzeugklimaanlage 1 an dem Gehäuse 5 oder anderen Teilen, z. B. einem Kühlmittelkühler, eingesetzt werden. Außerdem ist aufgrund der Geometrie und Konstruktion der formschlüssigen Verbindung 26 eine besonders sichere und zuverlässige Verbindung zwischen den Teilen 15, 17, 22 des Verbindungselementes 14 gewährleistet.

### Bezugszeichenliste

- 1: Kraftfahrzeugklimaanlage
- 2: Heizeinrichtung
- 3: Kältemittelverdampfer
- 3a: Kältemittelkondensator
- 4: Luftfilter
- 5: Gehäuse
- 6: Gebläse
- 7: Luftkanal
- 8: Gehäusewandung
- 9: Bodenwandung
- 10: Oberfläche
- 11: Luftauslassstutzen
- 12: Luftauslassöffnung
- 13: Ende des Luftauslassstutzens
- 14: Verbindungselement
- 15: Schraube
- 16: Zylindrischen Stift
- 17: Beilagscheibe
- 18: Längsachse des Stiftes
- 19: Gewinde
- 20: Schraubenkopf
- 21: Geometrie zur Verbindung mit Schraubendreher
- 22: Dämpfungskörper
- 23: Bohrung an Dämpfungskörper
- 24: Axiale Ende der Bohrung

- 25: Äußere Ringnut
- 26: Formschlüssige Verbindung
- 27: Radiale Aussparung
- 28: Ringnut
- 29: Radialer Vorsprung
- 30: Ringförmige Wulst
- 31: Sammelbehälter
- 32: Wasserkasten
- 33: Befestigungsöffnung
- 34: Befestigungsschlitz
- 35: Stutzen

## Patentansprüche

1. Verbindungselement (14), umfassend
- eine Schraube (15) mit einem zylindrischen Stift (16) und einem Schraubenkopf (20) als axialen Anschlag für den zylindrischen Stift (16), wobei der zylindrische Stift (16) mit einem Gewinde (19) versehen ist,
- einen Dämpfungskörper (22) mit einer Bohrung (23), wobei in der Bohrung (23) der zylindrische Stift (16) angeordnet ist und der Dämpfungskörper (22) verliersicher mit der Schraube (15) verbunden ist,
wobei der Dämpfungskörper (22) mit einer formschlüssigen Verbindung (26) zwischen dem Dämpfungskörper (22) und dem zylindrischen Stift (16) an der Schraube (15) in Richtung einer Längsachse des Stiftes (16) befestigt ist und die formschlüssige Verbindung in Richtung der Längsachse (18) des Stiftes (16) zwischen den beiden axialen Enden (24) der Bohrung (23) ausgebildet ist,
**dadurch gekennzeichnet, dass**
der Dämpfungskörper (22) unter einer Druckvorspannung zwischen dem Schraubenkopf (20) und einem Vorsprung (29), welcher am Dämpfungskörper (22) an der Wandung der Bohrung (23) in radialer Richtung angeordnet ist, oder einer Aussparung (27), welche in radialer Richtung an der Wandung des Stiftes (16) angeordnet ist, angeordnet ist, wobei der Dämpfungskörper (22) aufgrund der Druckvorspannung elastisch verformt ist, so dass der Dämpfungskörper (22) in axialer Richtung eine negative Dehnung aufweist.

2. Verbindungselement nach Anspruch 1, **dadurch gekennzeichnet, dass** die formschlüssige Verbindung durch die radiale Aussparung und den radialen Vorsprung in Richtung einer Längsachse (18) des Stiftes (16) einen Abstand von mehr als 5% der Ausdehnung der Bohrung (23) in Richtung der Längsachse (18) zu den beiden axialen Enden (24) der Bohrung (23) aufweist.

3. Verbindungselement nach Anspruch 1 oder 2, **dadurch gekennzeichnet, dass** der radiale Vorsprung (29) in die radiale Aussparung (27) eingreift zur verliersicheren Verbindung des Dämpfungskörpers (22) mit der Schraube (15) und die formschlüssige Verbindung (26) zwischen dem Dämpfungskörper (22) an der Wandung der Bohrung (23) und dem zylindrischen Stift (16) besteht.

4. Verbindungselement nach Anspruch 3, **dadurch gekennzeichnet, dass** die Aussparung (27) eine Ringnut (28) und der Vorsprung (29) eine ringförmige Wulst (30) ist.

5. Verbindungselement nach Anspruch 3 oder 4, **dadurch gekennzeichnet, dass** der Dämpfungskörper (22) mit Hilfe der Aussparung (27) und dem Vorsprung (29) formschlüssig, insbesondere im Wesentlichen ausschließlich formschlüssig, in Richtung der Längsachse (18) des Stiftes (16) an der Schraube (15) befestigt ist.

6. Verbindungselement nach einem oder mehreren der vorhergehenden Ansprüche, **dadurch gekennzeichnet, dass** zwischen dem Schraubenkopf (20) und dem Dämpfungskörper (22) eine Beilagscheibe (17) angeordnet ist.

7. Verbindungselement nach einem oder mehreren der vorhergehenden Ansprüche, **dadurch gekennzeichnet, dass** der Dämpfungskörper (22) wenigstens teilweise, insbesondere vollständig, aus einem elastischen Material, z. B. Kunststoff und/oder Gummi, besteht.

8. Verbindungselement nach einem oder mehreren der vorhergehenden Ansprüche, **dadurch gekennzeichnet, dass** der zylindrische Stift (16) nur an dem außerhalb der Bohrung (23) des Dämpfungskörpers (22) angeordneten Abschnitt mit dem Gewinde (19) versehen ist und/oder der zylindrische Stift (16) an dem außerhalb der Bohrung (23) des Dämpfungskörpers (22) angeordneten Abschnitt einen kleineren Durchmesser aufweist als an dem innerhalb der Bohrung (23) angeordneten Abschnitt.

9. Kraftfahrzeugklimaanlage (1), umfassend
- ein Gehäuse (5),
- ein Gebläse (6),
- eine Heizeinrichtung (2),
- einen Kältemittelverdampfer (3),
- wenigstens ein Verbindungselement (14),
**dadurch gekennzeichnet, dass**
das wenigstens eine Verbindungselement (14) gemäß einem oder mehreren der Ansprüche 1 bis 8 ausgebildet ist, insbesondere mit dem wenigstens einen Verbindungselement (14) die Heizeinrichtung (2) und/oder der Kältemittelverdampfer (3) an dem Gehäuse (5) befestigt ist.

10. Kältemittelkreislauf einer Kraftfahrzeugklimaanlage nach Anspruch 9, **dadurch gekennzeichnet, dass** mit dem wenigstens einen Verbindungselement (14) ein Kältemittelkondensator (3a) an einem Kühlmittelkühler, insbesondere einem Wasserkasten (32) des Kühlmittelkühlers, befestigt ist.

## Claims

1. Connecting element (14), comprising
- a screw (15) with a cylindrical pin (16) and a screw head (20) as the axial stop for the cylindrical pin (16), wherein the cylindrical pin (16) is provided with a thread (19),
- a damping body (22) with a bore (23), wherein the cylindrical pin (16) is arranged inside the bore (23) and the damping body (22) is captively connected to the screw (15),
wherein the damping body (22) is attached to the screw (15) in the direction of a longitudinal axis of the pin (16) with a form-fitting connection (26) between the damping body (22) and the cylindrical pin (16) and the form-fitting connection is formed in the direction of the longitudinal axis (18) of the pin (16) between the two axial ends (24) of the bore (23) **characterised in that**
the damping body (22)is arranged under a compressive pre-stress between the screw head (20) and a protrusion (29) arranged on the wall of the bore (23) of the damping body (22) in a radial direction, or a recess (27) arranged in a radial direction on the wall of the pin (16), wherein the damping body (22) is elastically deformed due to the compressive pre-stress, so that the damping body (22) is negatively stretched in the axial direction.

2. Connecting element according to claim 1, **characterised in that** the form-fitting connection has a distance of more than 5% of the stretching of the bore (23) in the direction of the longitudinal axis (18) to the two axial ends (24) of the bore (23) due to the radial recess and the radial protrusion in the direction of a longitudinal axis (18) of the pin (16).

3. Connecting element according to claim 1 or 2, **characterised in that** the radial protrusion (29) engages the radial recess (27) for captively connecting the damping body (22) with the bolt (15) and the form-fitting connection (26) exists between the damping body (22) on the wall of the bore (23) and the cylindrical pin (16).

4. Connecting element according to claim 3, **characterised in that** the recess (27) is an annular groove (28) and the protrusion (29) is an annular bead (30).

5. Connecting element according to claim 3 or 4, **characterised in that** the damping body (22) is attached to the screw (15) in a form-fitting way, in particular substantially exclusively attached in a form-fitting way, in the direction of the longitudinal axis (18) of the pin (16) with the help of the recess (27) and the protrusion (29).

6. Connecting element according to one or more of the preceding claims, **characterised in that** a shim (17) is arranged between the screw head (20) and the damping body (22).

7. Connecting element according to one or more of the preceding claims, **characterised in that** the damping body (22) consists at least partially, in particular completely, of an elastic material, for example plastic and/or rubber.

8. Connecting element according to one or more of the preceding claims, **characterised in that** the cylindrical pin (16) is provided with the thread (19) only in the section arranged outside the bore (23) of the damping body (22) and/or the cylindrical pin (16) has a smaller diameter in the section arranged outside the bore (23) of the damping body (22) than in the section arranged inside the bore (23).

9. Vehicle air conditioning (1), comprising:
- a casing (5),
- a fan (6),
- a heater (2),
- a refrigerant evaporator (3),
- at least one connecting element (14),
**characterised in that**
the at least one connecting element (14) is designed according to one or more of claims 1 to 8, in particular the heater (2) and/or the refrigerant evaporator (3) are attached to the casing (5) with the at least one connecting element (14).

10. Coolant circulation of a vehicle air conditioning system according to claim 9, **characterised in that** a refrigerant condenser (3a) is attached to a coolant cooler, in particular a water tank (32) of the coolant cooler, with the at least one connecting element (14).

## Revendications

1. Elément d'assemblage (14) comprenant
- une vis (15) comportant une tige cylindrique (16) et une tête de vis (20) servant de butée axiale pour la tige cylindrique (16), où la tige cylindrique (16) est dotée d'un filetage (19),
- un corps amortisseur (22) comportant un perçage (23), où la tige cylindrique (16) est disposée dans le perçage (23), et le corps amortisseur (22) est assemblé avec la vis (15), de façon imperdable,
où le corps amortisseur (22) est fixé sur la vis (15) suivant la direction d'un axe longitudinal de la tige (16), fixation obtenue en réalisant un assemblage par complémentarité de forme (26) entre le corps amortisseur (22) et la tige cylindrique (16), et l'assemblage par complémentarité de forme est réalisé entre les deux extrémités axiales (24) du perçage (23), suivant la direction de l'axe longitudinal (18) de la tige (16),
**caractérisé en ce que**
le corps amortisseur (22), sous l'effet d'une précontrainte de compression, est disposé entre la tête de vis (20) et une partie saillante (29) qui est disposée, sur le corps amortisseur (22), sur la paroi du perçage (23) suivant la direction radiale, ou bien disposé entre la tête de vis et un évidement (27) qui est disposé sur la paroi de la tige (16) dans le sens radial, où le corps amortisseur (22) est déformé élastiquement en raison de la précontrainte de compression, de sorte que le corps amortisseur (22) présente un allongement négatif dans la direction axiale.

2. Elément d'assemblage selon la revendication 1, **caractérisé en ce que** l'assemblage par complémentarité de forme présente, par rapport aux deux extrémités axiales (24) du perçage (23), une distance de plus de 5 % de la dimension du perçage (23) suivant la direction de l'axe longitudinal (18), ladite distance étant due à l'évidement radial et à la partie saillante radiale suivant la direction d'un axe longitudinal (18) de la tige (16).

3. Elément d'assemblage selon la revendication 1 ou 2, **caractérisé en ce que** la partie saillante radiale (29) pénètre dans l'évidement radial (27) pour l'assemblage imperdable du corps amortisseur (22) avec la vis (15), et l'assemblage par complémentarité de forme (26) est réalisé entre le corps amortisseur (22), sur la paroi du perçage (23), et la tige cylindrique (16).

4. Elément d'assemblage selon la revendication 3, **caractérisé en ce que** l'évidement (27) est une rainure annulaire (28), et la partie saillante (29) un bourrelet (30) de forme annulaire.

5. Elément d'assemblage selon la revendication 3 ou 4, **caractérisé en ce que** le corps amortisseur (22) est fixé sur la vis (15) suivant la direction de l'axe longitudinal (18) de la tige (16), par complémentarité de forme, à l'aide de l'évidement (27) et de la partie saillante (29), fixation réalisée en particulier pratiquement exclusivement par complémentarité de forme.

6. Elément d'assemblage selon l'une quelconque ou plusieurs des revendications précédentes, **caractérisé en ce qu'**une rondelle de calage (17) est disposée entre la tête de vis (20) et le corps amortisseur (22).

7. Elément d'assemblage selon l'une quelconque ou plusieurs des revendications précédentes, **caractérisé en ce que** le corps amortisseur (22) se compose au moins en partie, en particulier en totalité, d'une matière élastique, par exemple de matière plastique et / ou de caoutchouc.

8. Elément d'assemblage selon l'une quelconque ou plusieurs des revendications précédentes, **caractérisé en ce que** la tige cylindrique (16) est dotée du filetage (19) seulement sur la partie disposée à l'extérieur du perçage (23) du corps amortisseur (22) et / ou la tige cylindrique (16) présente, sur la partie disposée à l'extérieur du perçage (23) du corps amortisseur (22), un diamètre plus petit que celui sur la partie disposée à l'intérieur du perçage (23).

9. Système de climatisation (1) d'un véhicule automobile, comprenant
- un carter (5),
- un ventilateur (6),
- un dispositif de chauffage (2),
- un évaporateur de fluide frigorigène (3),
- au moins un élément d'assemblage (14),
**caractérisé en ce que**
l'élément d'assemblage (14) au moins au nombre de un est conçu conformément à l'une quelconque ou à plusieurs des revendications 1 à 8, en particulier le dispositif de chauffage (2) et / ou l'évaporateur de fluide frigorigène (3) est fixé sur le carter (5) avec l'élément d'assemblage (14) au moins au nombre de un.

10. Circuit de fluide frigorigène d'un système de climatisation d'un véhicule automobile selon la revendication 9, **caractérisé en ce qu'**un condenseur de fluide frigorigène (3a) est fixé, avec l'élément d'assemblage (14) au moins au nombre de un, sur un radiateur à liquide de refroidissement, en particulier sur une boîte à eau (32) du radiateur à liquide de refroidissement.
